# EUROPEAN PATENT APPLICATION

(11) **EP 2 228 797 A1**
(43) Date of publication of application: **15.09.2010**
(21) Application number: 10002376.1
(22) Date of filing: 08.03.2010
(51) Int. Cl.: G11B 27/00, G11B 27/34, G11B 19/02

(54) **Digital audio data reproducing apparatus**

(30) Priority: 11.03.2009 JP 2009058092
(71) Applicant: Wacom Co., Ltd., Saitama, 349-1148 (JP)
(72) Inventor: Shimizu, Yutaka, Ichikawa-shi Chiba (JP); Uchiyama, Yuusuke, Mitaka-shi Tokyo (JP); Aoki, Takashi, Kamakura-shi Kanagawa (JP)
(74) Representative: Appelt, Christian W.

(57) **Abstract**

A digital audio data reproducing apparatus includes a main section and an operator section, which may be implemented as a remote controller detachable from the main section. The operator section includes a sensor configured to detect a touch and movement of an instructing member (e.g., a DJ player's finger) and to output corresponding operation data. The operator section further includes a first wireless communication block configured to transmit the operation data. The main section includes a second wireless communication block configured to receive the operation data, and a storage block configured to store a plurality of audio (e.g., music) data files. The main section further includes a reproduction processing block configured to simultaneously reproduce at least two of the plurality of audio data files, which are read from the storage block and processed according to the operation data received via the second wireless communication block.

## Description

### CROSS REFERENCES TO RELATED APPLICATIONS

The present application claims priority from Japanese Patent Application JP 2009-058092 filed in the Japanese Patent Office on March 11, 2009.

### BACKGROUND OF THE INVENTION

### 1. Field of the Invention

The present invention relates to a technology related to a digital audio data reproducing apparatus. More particularly, the present invention relates to a digital audio data reproducing apparatus suitable for "DJ (Disc Jockey) plays."

### 2. Description of the Related Art

A special music reproduction method is known in which, in case of reproducing dance music for example, two or more record players are used and the tempos of different music tracks are matched, thereby providing special sound effects as though the tracks are linked together in a medley. Such a special reproduction method is known as "DJ play." An apparatus configured to realize this DJ play with a CD (Compact Disc) player was disclosed in Japanese Patent Laid-Open No. 2004-288341.

### SUMMARY OF THE INVENTION

CD players normally have mechanical parts such as a spindle motor and an optical pickup for reproducing CDs, a feedback controller for controlling an optical beam to follow tracks, and so on. CD players with numerous mechanical parts may be fragile, bulky, and take up a lot of space.

The above-mentioned DJ play normally uses analog records and CDs. These media are limited in the number of music tracks that can be recorded to one medium, so that a realization of desired DJ play requires a frequent exchange of the media. For this reason, a so-called "DJ player" (a person, hereafter referred to simply as a player) cannot move away from a device that reproduces these media. As a result, freedom in players operation and activity is restricted, thereby preventing the player from performing as desired. Also, a player uses many kinds of apparatuses such as a record player, a mixer, and so on, so it is necessary to have sufficient space to install these apparatuses.

The present invention addresses the above-identified problems associated with prior art methods and apparatuses and solves the addressed problems by providing a novel digital audio data reproducing apparatus with mechanical robustness, low cost, and flexible operation as compared to prior art DJ play apparatuses that use media such as CDs.

In carrying out the invention and according to one aspect thereof, there is provided a digital audio data reproducing apparatus having a main section, and an operator section (implemented as a remote controller, for example) detachably arranged on the main section. A sensor is arranged on the operator section to detect an operation based on the touch and movement of an instructing member (e.g., a DJ player's finger). The operator section also includes a first wireless communication block for transmitting operation data detected by the sensor to the main section. The main section includes a second wireless communication block for receiving the operation data transmitted from the operator section. The main section further includes a storage block configured to store a plurality of audio (e.g., music) data files, and a reproduction processing block configured to simultaneously reproduce at least two of the plurality of audio data files, which are read from the storage block and processed according to the operation data received via the second wireless communication block.

In various embodiments, the sensor for detecting an operation based on the touch and movement of an instructing member (e.g., a finger) is built in the operator section, and the operation data entered therethrough are used to simultaneously reproduce two (or more) audio (music) data files while controlling a reproduction state of each of these files.

As described above and according to embodiments of the invention, a digital audio data reproducing apparatus is provided that is robust in construction and low in cost, and realizes flexible operability as compared with prior art DJ play apparatuses based on CDs or the like.

### BRIEF DESCRIPTION OF THE DRAWINGS

FIG. 1 is an overall perspective view of a digital audio data reproducing apparatus according to one embodiment of the invention;
FIG. 2 is an overall perspective view of the digital audio data reproducing apparatus shown in FIG. 1 with an operator section (e.g., a remote controller) thereof removed;
FIG. 3 is a front view of the remote controller shown in FIG. 1;
FIG. 4 is an overall block diagram of the digital audio data reproducing apparatus shown in FIG. 1;
FIG. 5 is a block diagram illustrating a reproduction processing block of the digital audio data reproducing apparatus shown in FIG. 1;
FIG. 6 is a block diagram of a first signal processing unit and a second signal processing unit of the digital audio data reproducing apparatus shown in FIG. 1;
FIG. 7 is a functional block diagram of the remote controller shown in FIG. 3; and
FIG 8A is a diagram illustrating a sensor board of the remote controller shown in FIG. 3, and FIG. 8B is a diagram illustrating one-dimensional address allocation used for the sensor board of FIG. 8A.

### DETAILED DESCRIPTION OF THE PREFERRED EMBODIMENTS

A digital audio data reproducing apparatus according to one embodiment of the invention is configured to reproduce audio data files having compressed audio data formats, such as MP3 (MPEG Audio Layer 3), WMA (Windows® Media Audio), and AAC (Advanced Audio Coding), and non-compressed audio data formats, such as WAV (RIFF waveform Audio Format) and AIFF (Audio Interchange File Format). The digital audio data reproducing apparatus reproduces audio data files stored in an incorporated hard disk drive (hereafter referred to as a HDD) and/or a flash memory such as a CF (Compact Flash) card. The digital audio data reproducing apparatus has a special reproducing function called "DJ play" which, in reproducing a music data file (one type of audio data file), matches the tempos of different music tracks to provide an effect in which these different music tracks are connected in a medley. In order to realize this DJ play function, a remote controller having a disc-shaped touch sensor is detachably arranged on the main body of the digital audio data reproducing apparatus.

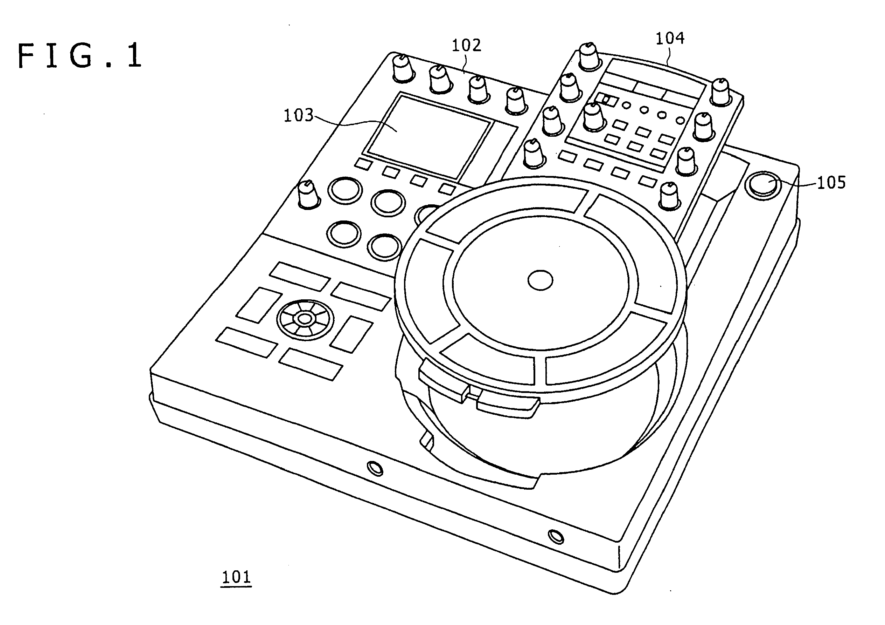

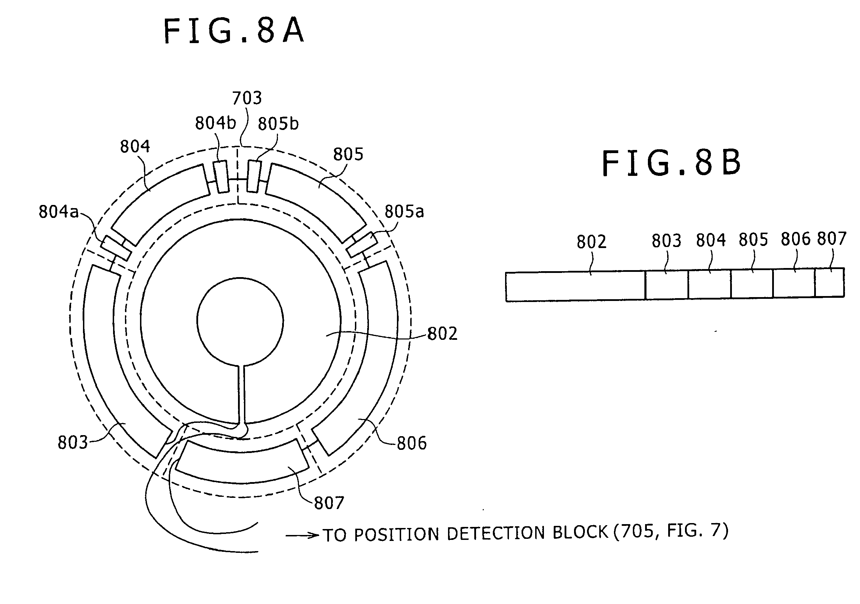

The following describes embodiments of the present invention with reference to FIG. 1 through FIGS. 8A and 8B.

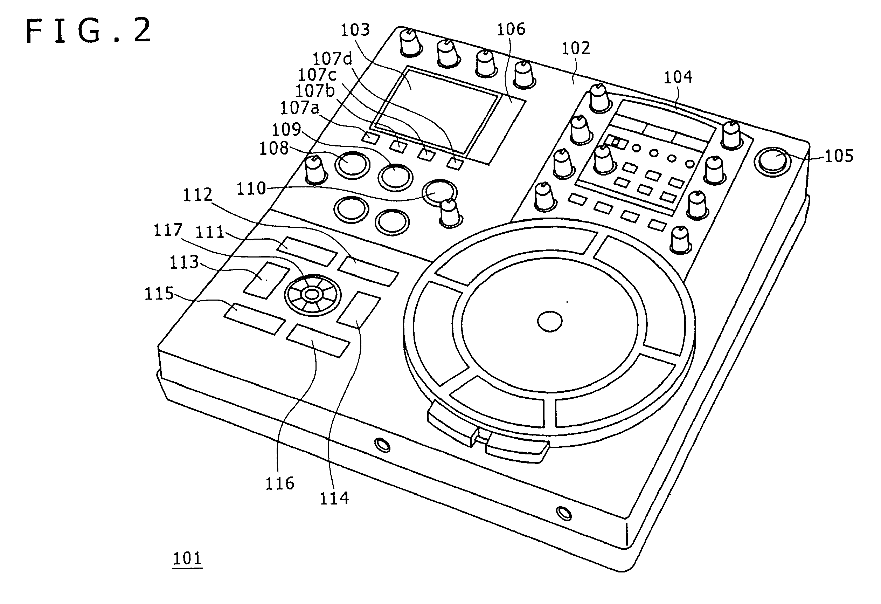

First, a configuration of a digital audio data reproducing apparatus according to one embodiment of the present invention is described with reference to FIG. 1 and FIG. 2. As shown in FIG. 1, a digital audio data reproducing apparatus 101 has a display block 103 formed of an LCD (Liquid Crystal Display) on the upper surface of a main section 102 that is an approximately flat board and is close to a size of a record jacket. On the right-hand side of the upper surface of the main section 102 as illustrated in FIGS. 1 and 2, a detachable remote controller 104 is installed.
Pressing a release button 105 arranged in the upper right corner on the upper surface of the main section 102 causes a detaching mechanism (not shown) arranged on a rear surface of the remote controller 104 to operate, thereby releasing the remote controller 104 from the main section 102.

The digital audio data reproducing apparatus 101 has a CF card slot on the back side of the main section 102 (not shown). When a CF card in which audio data files are stored is loaded in this slot, audio data files are reproduced from the CF card. It should be noted that, instead of CF cards, a HDD device may be incorporated in the digital audio data reproducing apparatus 101 and audio data files may be stored in this HDD device.

The following describes the controls arranged on the top surface of the main section 102 with reference to FIG. 2. The display block 103 is formed of an LCD, for example. The display block 103 has functions of displaying a list of audio data files stored in the HDD or the CF card to be reproduced, the waveforms of an audio data file being reproduced, and other various kinds of information.
On the right side of the display block 103, a level indicator 106 formed of an LED (Light Emitting Diode) is arranged. The level indicator 106 displays real time master output signal levels, for example.
Below the display block 103, four sample specification buttons 107a, 107b, 107c, and 107d are arranged.
Below these sample specification buttons 107a, 107b, 107c, and 107d, a sample record button 108, a sample reproduction button 109, and a phrase record button 110 are arranged.
Below these sample record buttons 108, sample reproduction button 109, and phrase button 110, a "BACK" button 111, a track select button 112, an A-channel specification button 113, a B-channel specification button 114, a "CUE" button 115, and a play/pause button 116 are arranged. Between the A-channel select button 113 and the B-channel select button 114, a jog dial 117 is arranged.

The digital audio data reproducing apparatus 101 according to the present embodiment is configured to specify two audio data files to be reproduced from among the audio data files stored in a CF card.
The digital audio data reproducing apparatus 101 has two channels, "A-channel" and "B-channel," inside the main section 102. The A-channel and the B-channel can be simultaneously reproduced under separate control operations.
Before starting or during a DJ play, the player presses the A-channel select button 113 to specify one audio data file on the A-channel and the B-channel select button 114 to specify another audio data file on the B-channel. These audio data file specifying operations are executed by displaying a music track list on the display block 103 and then scrolling the music track list by use of the jog dial 117. Next, the player points a desired audio (e.g., music) data file with a cursor or the like and presses the A-channel select button 113 or the B-channel select button 114 to determine the audio data file to be allocated to the A-channel or the B-channel.

In addition to the reproduction of audio data files selected as desired, the digital audio data reproducing apparatus 101 is capable of reproducing sampling sounds. As these sampling sounds, desired parts of a specified audio data file are allocated to the sample specification buttons 107a, 107b, 107c, and 107d, for example. When the player presses any of these sample specification buttons 107a, 107b, 107c, and 107d allocated to sampling sounds, a sampling sound allocated to the pressed sample specification button 107a, 107b, 107c, or 107d is reproduced. If sampling sounds are reproduced by pressing any of the sample specification buttons 107a, 107b, 107c, and 107d while another audio data file is reproduced, a percussion-like effect can be obtained, thereby satisfying the preferences of the player and audience for favorable audio effects.
This sampling sound reproduction function is allocated to either the A-channel or the B-channel.

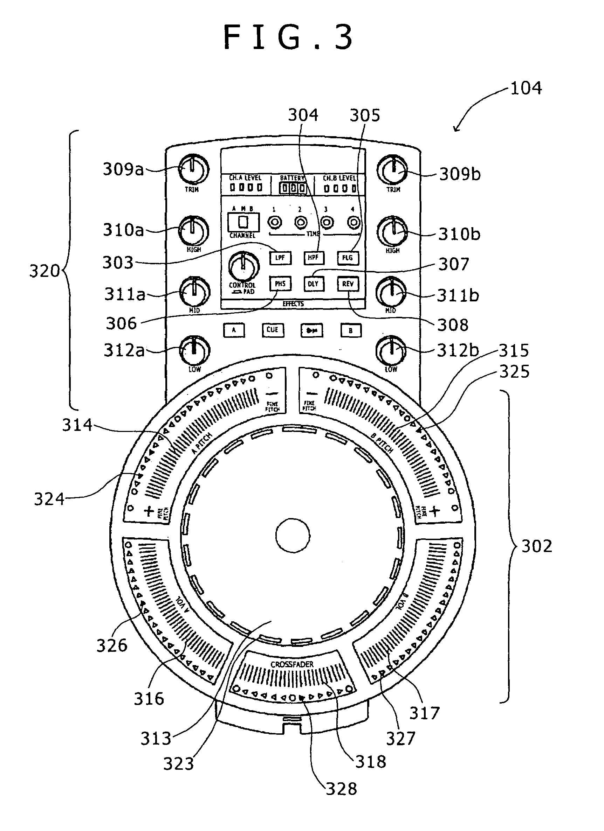

The following describes the remote controller 104 with reference to FIG. 3. The remote controller 104 generally consists of an operation panel 320 and a disc-shaped pad 302.
On the top surface of the remote controller 104, there are two or more buttons 304 through 308 for specifying effect functions, two or more operator knobs 309 through 312 for adjusting effect functions, and the disc-shaped pad 302 for use in reproducing DJ play and sampling sounds.

This pad 302 has a scratch area 313 composed of a disc-shaped sensor of electrostatic type, and substantially arc-shaped areas 314 through 318, each area being composed of an electrostatic sensor arranged around the scratch area 313. Electrostatic sensors of various types are known in the art. When the player touches these areas with his fingers, the touched sensor outputs an address representing the position of a touch. This address provides information indicative of a circumferential position within each sensor.
In each area of the pad 302, two or more LEDs are circumferentially arranged. These two or more LEDs function as indicators indicative of current control conditions.

An LPF button 303 is pressed to specify the effect function of a known lowpass filter. An HPF button 304 is pressed to specify the effect function of a known highpass filter. An FLG button 305 is pressed to specify a known flanging effect function. A PHS button 306 is pressed to specify a known phaser effect function. A DLY button 307 is pressed to specify a known delay effect function. A REV button 308 is pressed to specify a known reverberation effect function.
TRIM knobs 309a and 309b are potentiometers for adjusting the volumes of the A-channel and the B-channel, respectively. HIGH knobs 310a and 310b adjust the high frequency ranges of the A-channel and the B-channel, respectively. MID knobs 311a and 311b adjust the mid frequency ranges of the A-channel and the B channel, respectively. LOW knobs 312a and 312b adjust the low frequency ranges of the A-channel and the B-channel, respectively.

A scratch area 313 is an input device through which the player operates the music track data being reproduced or to be reproduced. For example, when the finger of the player touches this scratch area 313 during DJ play, the music track being reproduced is paused, and when this finger is removed from the scratch area 313, the reproduction of the paused music track is resumed.
When the finger of the player moves circumferentially with the finger continuously touching the scratch area 313 (this operation is known as a "drag"), the music track is reproduced in accordance with the finger's moving direction, moving distance, and moving speed. In other words, operations are realized which are equivalent, in reproducing a music record, to stopping or rotating the record with the finger (these operations are known as "scratch play").

In addition, the scratch area 313 functions as a reproduction-specifying button having four divided sections for reproducing four sampling sounds, respectively. The divided state (to reproduce various sampling sounds) is indicated by LED scratch indicators 323. In this divided state, a circumferential movement of the finger will not effectuate scratch play.

As for the upper two areas of the arc-shaped areas arranged on the external circumference of the pad 302, the left side is an A-channel pitch area 314, and the right side is a B-channel pitch area 315. When the player touches the A-channel pitch area 314 or the B-channel pitch area 315 and circumferentially moves his or her finger, the digital audio data reproducing apparatus 101 continuously changes the reproduction speed of the music being reproduced in accordance with the moving direction and moving distance of the finger. This is a known pitch control function. In addition, this area has "+" (Plus) and "-" (minus) markers on both ends thereof. The portion marked with "+" or "-" serves to adjust the pitch step by step. Every time the player's finger touches "+" or "-," the pitch can be adjusted step by step.
An A-pitch indicator 324 arranged on the outer circumference side of the A-channel pitch area 314 and a B-pitch indicator 325 arranged on the outer circumference side of the B-channel pitch area 315 are each indicative of to what degree the pitch has been varied as compared with that of the original music.

As for the lower two areas of the approximately arc-shaped areas arranged on the outer circumference of the pad 302, the left side is an A-channel volume area 316 and the right side is a B-channel volume area 317. When the player's finger moves in the circumferential direction touching the A-channel volume area 316 or B-channel volume area 317 during DJ play, the digital audio data reproducing apparatus 101 continuously changes the volume of the music being reproduced in accordance with the moving direction and distance of the finger's movement. A known fader effect is realized.
An A-volume indicator 326 arranged on the outer circumference side of the A-channel volume area 316 and a B-volume indicator 327 arranged on the periphery side of the B-channel volume area 317 display the volumes of audio (music) data files to be reproduced on the A-channel and the B-channel, respectively.

Of the arc-shaped areas arranged on the outer circumference of the pad 302, an area in the center of the lower section is a crossfader area 318. When the player moves the finger in the circumferential direction while touching the crossfader area 318 during DJ play, the volumes of the A-channel and the B-channel relatively change in accordance with the moving direction and moving distance of the finger. A known crossfader effect is realized.
A crossfader indicator 328 arranged on the outer circumference side of the crossfader area 318 displays a crossfade ratio.

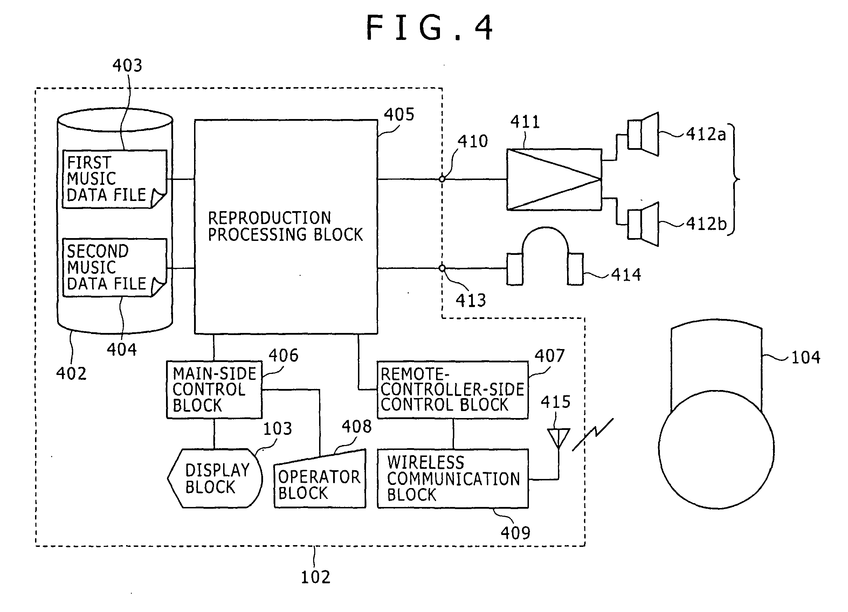

The following describes details of the functions of the digital audio data reproducing apparatus 101 including the main section 102 and the remote controller 104, with reference to FIG. 4.
In the main section 102, two or more audio data files are stored in a nonvolatile storage 402 composed of a HDD or a CF card. It should be noted that, with reference to FIG. 4 and subsequent figures, an audio data file allocated to the A-channel is referred to as a first music data file 403 and an audio data file allocated to the B-channel is referred to as a second music data file 404.
The first music data file 403 and the second music data file 404 are entered in a reproduction processing block 405, in which reproduction processing is executed on these files.
The reproduction processing block 405 is controlled by a main-side control block 406 and a remote-controller-side control block 407. It should be noted that the main-side control block 406 and the remote-controller-side control block 407 may be based on the same microcomputer, so that these control blocks may be realized by a functional division. A display block 103 and an operator block 408 are connected to the main-side control block 406. A wireless communication block 409 is connected to the remote-controller-side control block 407.
The wireless communication block 409 executes bidirectional communication with the remote controller 104 by use of a radio wave of 2.4 GHz, for example. Upon receiving operation data transmitted from the remote controller 104, the wireless communication block 409 converts the received operation data into specific control commands to control the reproduction processing block 405 and, at the same time, generates indicator drive control information indicative of control states and transmits the generated information to the remote controller 104.

The reproduction processing block 405 has two lines of output terminals; a master output terminal 410 and a monitor terminal 413. These terminals are based on stereo output.
The master output terminal 410 is used to connect an amplifier 411 and speakers 412a, 412b, for outputting analog audio signals that are actually heard by the audience.
The monitor terminal 413 is connected with a headphone 414, for outputting analog audio signals of the A-channel or the B-channel, independently from the master output terminal 410.

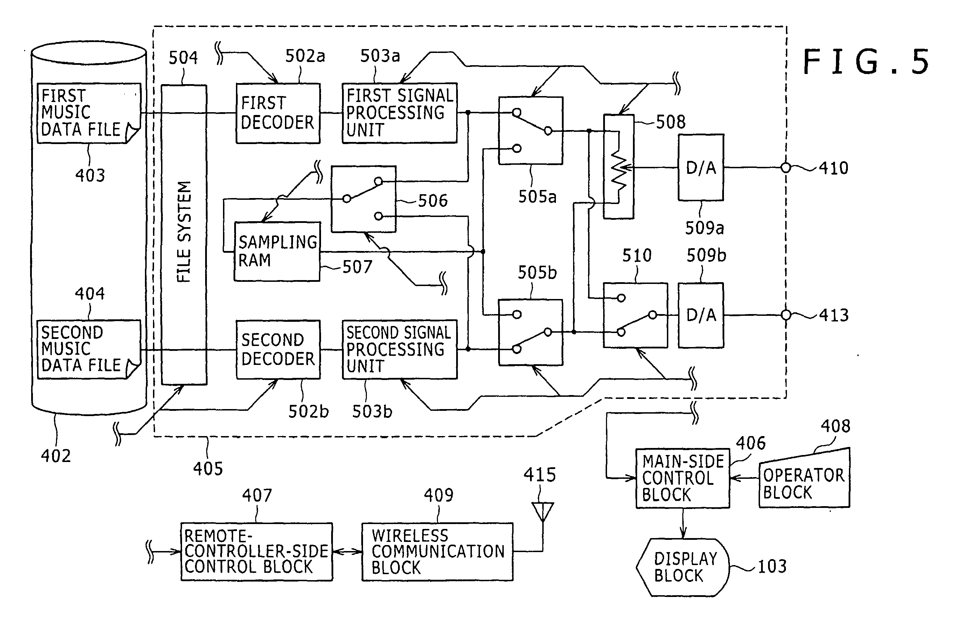

The following describes details of the reproduction processing block 405 with reference to FIG. 5.
Of two or more audio data files stored in the nonvolatile storage 402, the first music data file 403 and the second music data file 404 are specified by the reproduction processing block 405 through a file system 504.

A first decoder 502a, a second decoder 502b, and the file system 504 are connected to the main-side control block 406 to be controlled through the operator block 408.
A first signal processing unit 503a, a second signal processing unit 503b, a first selector switch 505a, a second selector switch 505b, a sampling selector switch 506, a crossfader 508, and a monitor selector 510 are connected to the remote-controller-side control block 407 to be controlled through the operation panel 320 and the pad 302 arranged on the remote controller 104.

The first decoder 502a reads in the first music data file 403 and executes appropriate decode processing adapted to each of audio data files having various formats, thereby converting the first music data file into PCM (Pulse Code Modulation) audio data.

The first decoder 502a and the second decoder 502b perform the same function. Likewise, the first signal processing unit 503a and the second signal processing unit 503b perform the same function. The first decoder 502a and the first signal processing unit 503a belong to the A-channel to process the first music data file 403. The second decoder 502b and the second signal processing unit 503b belong to the B-channel to process the second music data file 404. The following mainly describes the first decoder 502a and the first signal processing unit 503a, while omitting the description of the second decoder 502b and the second signal processing unit 503b having the same functions.

The first signal processing unit 503a executes predetermined signal processing on PCM audio data that is output from the first decoder 502a. The PCM audio data output from the first signal processing unit 503a is supplied to the first selector switch 505a and the sampling selector switch 506.
The first selector switch 505a selects between PCM audio data output from the first signal processing unit 503a and PCM audio data output from a sampling RAM (Random Access Memory) 507.
The sampling selector switch 506 selects between PCM audio data output from the first signal processing unit 503a and PCM audio data output from the second signal processing unit 503b and supplies the selected data to the sampling RAM 507.

The second selector switch 505b selects between PCM audio data output from the second signal processing unit 503b and PCM audio data output from the sampling RAM 507.

The PCM audio data output from the first selector switch 505a and the PCM audio data output from the second selector switch 505b are entered in the crossfader 508. An output signal from the crossfader 508 is digital-to-analog converted by a D/A converter 509a into an analog audio signal. This analog audio signal is output to an external device through the master output terminal 410.
The PCM audio data output from the first selector switch 505a and the PCM audio data output from the second selector switch 505b are also entered in the monitor selector 510. An output signal from the monitor selector 510 is digital-to-analog converted by a D/A converter 509b into an analog audio signal. This analog audio signal is output to a headphone 414 and so on through the monitor terminal 413.

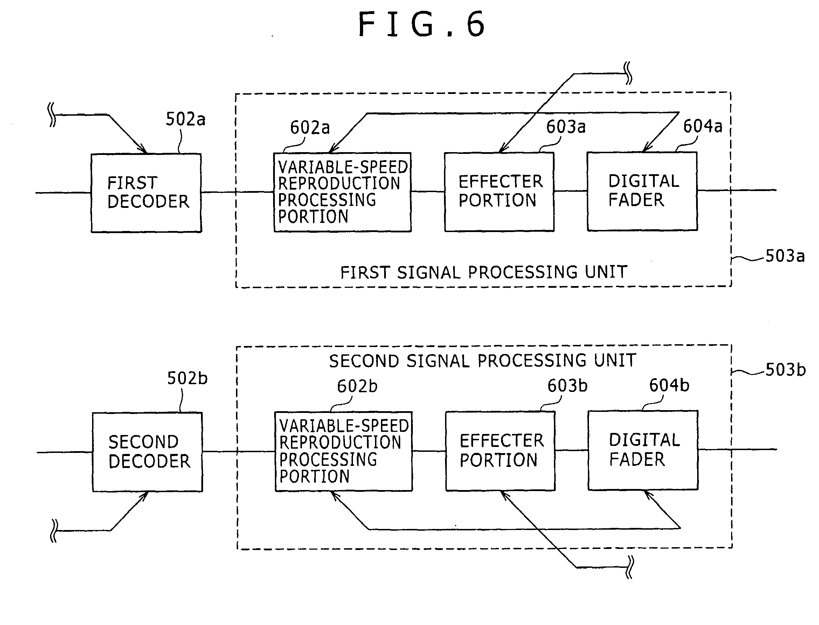

The following describes the first signal processing unit 503a and the second signal processing unit 503b with reference to FIG. 6. The first signal processing unit 503a and the second signal processing unit 503b perform the same function, so that only the first signal processing unit 503a will be described below, and the description of the second signal processing unit 503b will be omitted. The first signal processing unit 503a has a variable-speed reproduction processing portion 602a, an effecter portion 603a, and a digital fader 604a.

The variable-speed reproduction processing portion 602a changes the reproduction speed of the PCM audio data output from the first decoder 502a. To be more specific, time-axis compression/decompression processing is executed on the PCM audio data. Control information based on an operation performed on the scratch area 313 and the A-channel pitch area 314 of the remote controller 104 is entered in the variable-speed reproduction processing portion 602a from that remote controller 104.

The effecter portion 603a executes predetermined effect processing on the PCM audio data output from the variable-speed reproduction processing portion 602a. Control information based on operations performed on the LPF button 303, the HPF button 304, the FLG button 305, the PHS button 306, the DLY button 307, the REV button 308, the TRIM knobs 309a and 309b, the HIGH knobs 310a and 310b, the MID knobs 311a and 311b, and the LOW knobs 312a and 312b of the remote controller 104 shown in FIG. 3 is entered in the effecter portion 603a.

The digital fader 604a adjusts the volume of the PCM audio data output from the effecter portion 603a. Control information based on operations performed on the A-channel volume area 316 and the crossfader area 318 of the remote controller 104 is entered in this digital fader 604a.

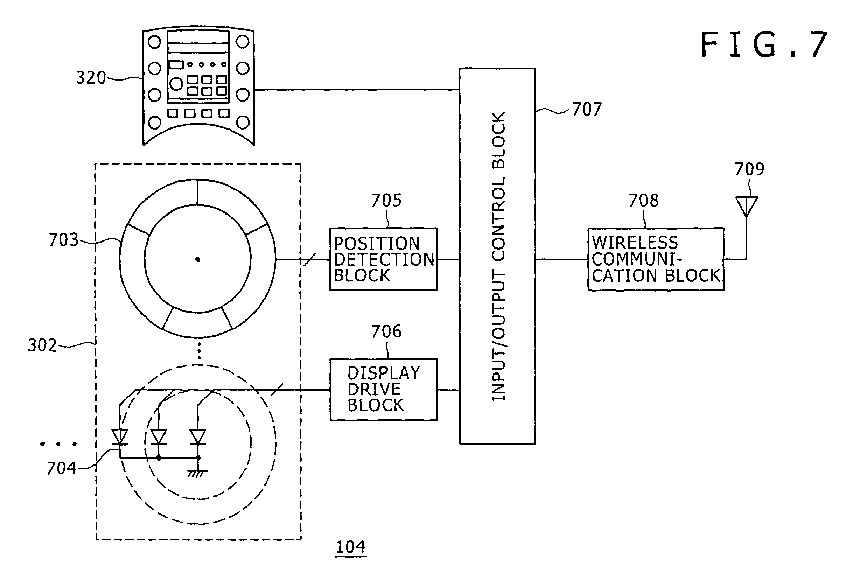

The following describes the functions of the remote controller 104 with reference to FIGS. 3 and 7.
As shown in FIG. 3, the operation panel 320 of the remote controller 104 has the LPF button 303, the HPF button 304, the FLG button 305, the PHS button 306, the DLY button 307, the REV button 308, the TRIM knobs 309a and 309b, the HIGH knobs 310a and 310b, the MID knobs 311a and 311b, and the LOW knobs 312a and 312b.
A sensor board 703 and an LED array 704 are embedded directly under the pad 302.

The sensor board 703 is connected to a position detection block 705. The position detection block 705 detects and outputs a finger position on the pad and an address of the finger position. In other words, the sensor board 703 and the position detection block 705 detect a finger position on the pad 302.
The LED array 704 is connected to a display drive block 706.
An input/output control block 707 may be implemented as a microprocessor for example. The input/output control block 707 receives operation information entered through the operation panel 320 (of the remote controller 104), and also receives information related to the existence of any finger touch and the address thereof from the position detection block 705. The input/output control block 707 outputs display control information for controlling an LED display to the display drive block 706. The input/output control block 707 is connected to a wireless communication block 708. The input/output control block 707 transmits operation data for controlling the main section 102 through the wireless communication block 708. Further, the input/output control block 707 receives display control information of the LED array 704 from the main section 102 through the wireless communication block 708 to control a light emitting drive operation of the LEDs through the display drive block 706.

The following describes the sensor board 703 with reference to FIGS. 8A and 8B.
A plurality of reception electrodes are arranged on the sensor board 703. These reception electrodes include a scratch reception electrode 802 arranged immediately under the scratch area 313, an A-channel volume reception electrode 803 arranged immediately under the A-channel volume area 316, an A-channel pitch reception electrode 804 arranged immediately under the A-channel pitch area 314, a B-channel pitch reception electrode 805 arranged immediately under the B-channel pitch area 315, a B-channel volume reception electrode 806 arranged immediately under the B-channel volume area 317, and a crossfader reception electrode 807 arranged immediately under the crossfader area 318.

On each side of the A-channel pitch reception electrode 804, an A-plus (+) fine adjustment reception electrode 804a and an A-minus (-) fine adjustment reception electrode 804b are arranged, respectively. This A-plus (+) fine adjustment reception electrode 804a is arranged immediately under a location where "+ (plus)" of the A-channel pitch area 314 is printed. Likewise, the A-minus (-) fine adjustment reception electrode 804b is arranged immediately under a location where "- (minus)" of the A-channel pitch area 314 is printed.

On each side of the B-channel pitch reception electrode 805, a B-plus (+) fine adjustment reception electrode 805a and a B-minus (-) fine adjustment reception electrode 805b are arranged, respectively. The B-plus (+) fine adjustment reception electrode 805a is arranged immediately under a location where "+ (plus)" of the B-channel pitch area 315 is printed. Likewise, the B-minus (-) fine adjustment reception electrode 805b is arranged immediately under a location where "- (minus)" of the B-channel pitch area 315 is printed.

It should be noted that the scratch reception electrode 802, the A-channel volume reception electrode 803, the A-channel pitch reception electrode 804, the B-channel pitch reception electrode 805, the B-channel volume reception electrode 806, and the crossfader reception electrode 807 correspond to continuous one-dimensional address information, as illustrated in FIG. 8B.

Referring to FIG. 8B, below is one example of addresses allocated to the scratch reception electrode 802, the A-channel volume reception electrode 803, the A-channel pitch reception electrode 804, the B-channel pitch reception electrode 805, the B-channel volume reception electrode 806, and the crossfader reception electrode 807. The scratch reception electrode 802 corresponds to 128 addresses, 0 to 127. The A-channel volume reception electrode 803 corresponds to 83 addresses, 128 to 210. The A-plus (+) fine adjustment reception electrode 804a corresponds to address "211," namely, one address. The A-channel pitch reception electrode 804 corresponds to 81 addresses, 212 to 292. The A-minus (-) fine adjustment reception electrode 804b corresponds to address "293," namely, one address. The B-minus (-) fine adjustment reception electrode 805b corresponds to address "294," namely, one address. The B-channel pitch reception electrode 805 corresponds to 81 addresses, 295 to 375. The B-plus (+) fine adjustment reception electrode 805a corresponds to address "376," namely, one address. The B-channel volume reception electrode 806 corresponds to 83 addresses, 377 to 459. Finally, the crossfader reception electrode 807 corresponds to 52 addresses, 460 to 511.

The reception electrodes 802 through 807 arranged on the sensor board 703 each corresponds to a unique one-dimensional address corresponding to a finger touch position. The position detection block 705 (FIG. 7) outputs the address of the position at which the finger touches. This address information is entered in the wireless communication block 708 through the input/output control block 707 and the wireless communication block 708 outputs the address information in the form of a radio wave through an antenna 709.

Referring back to FIG. 4, the wireless communication block 409 of the main section 102 receives the radio wave at an antenna 415 and outputs the demodulated address information to the remote-controller-side control block 407. On the basis of the address information received from the wireless communication block 409, the remote-controller-side control block 407 controls the reproduction processing block 405 so as to realize the above-mentioned various functions.
For example, when the pad 302 is not touched by the finger and then if one address of 0 to 127 (corresponding to the scratch reception electrode 802) is received via the pad 302 (i.e., the finger is touched thereon), the remote-controller-side control block 407 stops transferring PCM audio data to the first signal processing unit 503a. Then, when continuous addresses within a range of 0 to 127 are received, the remote-controller-side control block 407 executes PCM audio data reproduction control in accordance with the change direction and transfer rate of the addresses on the first signal processing unit 503a, thereby realizing scratch play operations.

As described above, the digital audio data reproducing apparatus in the present embodiment has the nonvolatile storage 402 capable of recording a plurality of audio (music) data files, and the operator section implemented as the detachable remote controller 104. This arrangement eliminates the need for media exchange, thereby freeing a player from limits in playing operations and activities. As a result, the player is able to execute a playing performance as desired.

The remote controller according to the present embodiment has an electrostatic position detection device that outputs absolute addresses. In order to divide the pad into two or more areas and allocate unique functions to these areas, the functions need only be distinguishable in accordance with the addresses received by the pad 302. Because the remote controller according to the present embodiment is a position detection device based on electrostatic coupling and therefore has no mechanical section, this remote controller has, in principle, no mechanical vulnerability in normal use.

Consequently, embodiments of the present invention provide a digital audio data reproducing apparatus that is low in cost of component parts, simple in construction, sturdy, and simple in design.

In addition, the pad 302 of DJ play employs a position detection device based on electrostatic coupling that outputs one-dimensional absolute addresses upon detection of the touch of the DJ player's finger. The operations essential to DJ play, such as scratch pad operations, fader and pitch control operations for two channels, and crossfader operations, are detected by the position detection device based on electrostatic coupling, which outputs the address information regarding these operations. The input/output control block 707 that receives the address information distinguishes the functions to be executed within a range of addresses. Therefore, embodiments of the present invention realize a digital audio data reproducing apparatus that is simple in construction and yet provides a variety of functions.

While preferred embodiments of the present invention have been described using specific terms, such description is for illustrative purpose only, and it is to be understood that changes and variations may be made without departing from the scope of the following claims.

## Claims

1. A digital audio data reproducing apparatus (101) comprising:
an operator section (104) having a sensor (703) configured to detect a touch and movement of an instructing member and to output operation data generated from the touch and movement of the instructing member, and a first wireless communication block (708) configured to transmit the operation data; and
a main section (102) comprising:
a second wireless communication block (409) configured to receive the operation data transmitted by the first wireless communication block (708);
a storage block (402) configured to store a plurality of audio data files (403, 404); and
a reproduction processing block (405) configured to simultaneously reproduce at least two of the plurality of audio data files (403, 404), which are read from the storage block (402) and processed according to the operation data received via the second wireless communication block (409),
wherein the operator section (104) is detachably arranged on the main section (102).

2. The digital audio data reproducing apparatus according to claim 1, wherein the sensor (703) comprises an electrostatic sensor.

3. The digital audio data reproducing apparatus according to claim 1,
wherein the sensor (703) comprises a substantially disc-shaped operation area configured to detect a touch position, a direction of movement, distance of movement, and speed of movement of the instructing member,
wherein the reproduction processing block (405) reproduces at least two of the plurality of audio data files (403, 404) in accordance with the detected touch position, direction of movement, distance of movement, and speed of movement of the instructing member.

4. The digital audio data reproducing apparatus according to claim 3,
wherein the sensor (703) further comprises a first channel pitch area (314) and a second channel pitch area (315) each configured to detect a touch position, direction of movement, distance of movement, and speed of movement of the instructing member,
wherein the reproduction processing block (405) is further configured, on the basis of the operation data, to execute a pitch adjustment of each of the at least two of the audio data files (403, 404) in accordance with the detected touch position, direction of movement, distance of movement, and speed of movement of the instructing member on the first and second channel pitch areas (314, 315), respectively.

5. The digital audio data reproducing apparatus according to claim 4, wherein the first channel pitch area (314) and the second channel pitch area (315) are arranged along an outer circumference of the operation area.

6. The digital audio data reproducing apparatus according to claim 1,
wherein the sensor (703) further comprises a first volume adjustment area (316) and a second volume adjustment area (317) configured to detect a direction of movement and distance of movement of the instructing member,
wherein the reproduction processing block (405) is further configured, on the basis of the operation data, to adjust a volume of each of the at least two of the audio data files in accordance with the detected direction of movement and distance of movement of the instructing member.

7. The digital audio data reproducing apparatus according to claim 6, wherein the first volume adjustment area (316) and the second volume adjustment area (317) are arranged along an outer circumference of the operation area.

8. The digital audio data reproducing apparatus according to claim 6,
wherein the sensor (703) further comprises a crossfader area (318) configured to detect a direction of movement and distance of movement of the instructing member, and
wherein the reproduction processing block (405) is further configured, on the basis of the operation data, to crossfade the volumes of the at least two of the audio data files (403, 404) in accordance with the detected direction of movement and distance of movement of the instructing member.

9. The digital audio data reproducing apparatus according to claim 8, wherein the first volume adjustment area (316) and the second volume adjustment area (317) are arranged in a horizontal symmetric manner with reference to the crossfade area (318) that is arranged along an outer circumference of the operation area.

10. The digital audio data reproducing apparatus according to claim 1, wherein the sensor (703) is divided into a plurality of sensor areas having absolute addresses.

11. The digital audio data reproducing apparatus according to claim 10, wherein the addresses are one-dimensionally allocated to the plurality of sensor areas.

12. A digital audio data reproducing apparatus comprising:
operator means having a sensor for detecting a touch and movement of an instructing member and for outputting operation data generated from the touch and movement of the instructing member, the operator means further having first wireless communication means for transmitting the operation data; and
main means having second wireless communication means for receiving the operation data transmitted from the first wireless communication means, storage means for storing a plurality of audio data files, and reproduction processing means for simultaneously reproducing at least two of the plurality of audio data files, which are read from the storage means and processed according to the operation data received via the second wireless communication means,
wherein the operator means is detachably arranged on the main means.
